# EUROPÄISCHE PATENTSCHRIFT

(11) **EP 1 359 129 B1**
(45) Veröffentlichungstag und Bekanntmachung des Hinweises auf die Patenterteilung: **24.06.2009**
(21) Anmeldenummer: 03009300.9
(22) Anmeldetag: 24.04.2003
(51) Int. Cl.: C04B 14/06, C04B 14/10, C04B 40/00

(54) **Zuschlagstoff sowie Vermischungen mit diesem Zuschlagstoff zur Herstellung von autoklavgehärteten Baustoffen**
Aggregate and mixtures containing said aggregate, for making autoclave hardened building materials
Agrégat et mélanges le contenant pour préparer des matériaux de construction durcis dans un autoclave

(30) Priorität: 02.05.2002 DE 10219707
(43) Veröffentlichungstag der Anmeldung: 05.11.2003
(73) Patentinhaber: Stephan Schmidt KG, 65599 Dornburg-Langendernbach (DE)
(72) Erfinder: Schellhorn, Matthias, Dr., 65556 Limburg an der Lahn (DE); Günther, Theodor H., Dipl.-Ing., 49545 Tecklenburg (DE)
(74) Vertreter: Müller, Eckhard

(56) Entgegenhaltungen:
- FR-A- 2 705 663
- US-A- 3 973 973
- US-A- 6 030 447

## Beschreibung

Die Erfindung bezieht sich auf einen Zuschlagsstoff bei der Herstellung von autoklav gehärteten Baustoffen, wie bspw. Kalksandsteine, Betonteile oder dergleichen, sowie Vormischungen bestehend aus Branntkalk, Zement oder weiteren Komponenten mit diesem Zuschlagsstoff.

Weitere Komponenten können etwa Steinmehle oder Quarzmehle sein, welche beispielsweise zur Optimierung der Sandsieblinie dienen. Durch Variation der Sandsieblinie werden Produktions- und/oder Produktparameter verändert, zum Beispiel Rohlingsfestigkeit, Rohdichte, Druckfestigkeit und dergleichen.

### Stand der Technik

Die Herstellung von Kalksandstein erfolgt dadurch, daß Sande, wie beispielsweise Quarzsande oder Branntkalke, und ggf. Zuschlagsstoffe, zum Beispiel feinkörnige Steinmehle oder grobkörnige Stoffe im Grobsand- oder Feinkiesbereich, in einer Rohmischung mittels einer Presse zu Rohlingen geformt und nachfolgend in einem Autoklavprozeß bei erhöhten Drucken und Temperaturen zu Calziumsilikathydratphasen umgesetzt werden.

Insoweit ist es hinlänglich bekannt, daß der Einsatz feinkörniger Steinmehle, gleich welcher Art, zur Erhöhung der Rohlingsstandfestigkeit führt. Im Autoklavprozeß reagieren Calciumhydroxid und Quarz zu Calciumsilikathydratphasen. Die Reaktion wird durch Anätzen oder vollständiges Auflösen von Quarzkörnern im basischen Milieu ermöglicht.

Da die Reaktion von Feststoffen in industriellen Fertigungsprozessen auf Grund thermodynamischer Gesetzmäßigkeiten häufig unvollständig abläuft, bleibt nach der Reaktion sowohl unverbrauchter Freikalk (Ca(OH)₂) als auch unverbrauchtes Quarz und Nebengemengteile, wie bspw. Feldspat, Glimmer und Steinmehlbestandteile, zurück.

Nachteilig bei dem bekannten Verfahren ist also, daß der Kalk nicht vollständig umgesetzt wird und letztlich mehr Kalk hinzugeben werden muß, als eigentlich reagiert. Diese Höherdosierung ist mit wirtschaftlichen Nachteilen verbunden. Ein weiterer Nachteil ist, daß diese unverbrauchten, zum Teil reaktiven Substanzen später zu Ausblühungen führen bzw. auch ansonsten unerwünschte Eigenschaften, wie verschlechterte Frost-Tau-Beständigkeit etc., aufweisen können. Darüber hinaus ist bedingt durch den Freikalkgehalt eine erhöhte Schwindung der Baustoffe festzustellen, wobei die zulässigen Schwindungsgrenzwerte häufig überschritten werden.

US 3 973 973 A1 beschreibt ein verfahren zur Herstellung eines Leichtzuschlagstoffes auf der Basis von Ton, wobei durch ein Additiv eine Gasentwicklung beim Brennvorgang erzeugt wird.

### Aufgabe

Davon ausgehend liegt der Erfindung die Aufgabe zugrunde, einen Zuschlagsstoff der eingangs genannten Art anzugeben, welcher unter Überwindung der vorgenannten Nachteile eine Reduzierung des Anteils von Branntkalk ermöglicht. Nach einem weiteren Aspekt der Erfindung soll auch eine Erhöhung der Druckfestigkeit der Baustoffe und zudem eine Verbesserung der Schwindungswerte sowie eine Verkürzung der Härtezeit im Autoklaven erreicht werden.

### Lösung

Zur Lösung dieser Aufgabe ist es nach der Erfindung im wesentlichen vorgesehen, daß als Zuschlagsstoff mineralischer Füllstoff mit einem SiO₂-Anteil von wenigstens 60%, vorzugsweise 75%, und einem Feinstkornanteil < 2µm von wenigstens 40 Gew. % des Zuschlagsstoffes vorgesehen ist, wobei der Korngrößenanteil < 0,5 µm mindestens 25 Gew. % des Zuschlagsstoffes beträgt. Mit anderen Worten sollte der Gehalt an SiO₂ in der Fraktion < 2µm mindestens 5% des Gesamtmineralbestandes betragen.

Durch den erfindungsgemäß vorgeschlagenen Kornaufbau der mineralischen Füllstoffe wird die Verfügbarkeit von reaktivem Siliziumoxid im Autoklaven deutlich verbessert und damit (unverbrauchter) Branntkalk nahezu vollständig umgesetzt. Hierdurch ist eine Reduzierung des Anteils von Branntkalk in den Baustoffen möglich, verbunden mit einer entsprechenden Kostenersparnis. Gleichzeitig ergibt sich eine Erhöhung der Druckfestigkeit autoklav gehärteter Baustoffe sowie eine Verbesserung der Schwindungswerte. Durch die Zurverfügungstellung von Siliziumdioxid mit entsprechend hoher spezifischer reaktiver Oberfläche wird eine Verkürzung der Härtezeiten der Baustoffe im Autoklavprozeß möglich. Auch hat sich gezeigt, daß durch den erfindungsgemäßen Zuschlagsstoff eine deutliche Verbesserung der CO₂-Bilanz aufgrund des verminderten Branntkalkeinsatzes bei Erzielung gleicher Steineigenschaften erreicht wird. Pro Tonne hergestellter Kalksandstein kann eine Reduzierung der CO₂-Bilanz von 10 kg erreicht werden. Bei der gesamten deutschen Kalksandsteinproduktion ließe sich mittels des erfindungsgemäßen Zuschlagsstoffs eine Reduzierung des CO₂-Ausstoßes von ca. 100.000 t pro Jahr erreichen.

Versuche haben gezeigt, daß bei reinen Quarzmehlen mit geringer spezifischer Oberfläche, aber auch bei Tonmehlen und/oder Kaolinen mit hohen Gehalten an Tonmineralen und nur geringen Quarzanteilen sich diese Vorteile nicht oder nur in geringem Umfange erzielen lassen.

Ein weiterer Vorteil des Einsatzes des erfindungsgemäßen Zuschlagsstoffes ist, daß durch die Umsetzung von Freikalk in Betonbaustoffen spätere Kalkausblühungen vermieden werden können.

Dadurch dass der Korngrößenanteil < 0,5 µm mindestens 25 Gew. % des Zuschlagsstoffes beträgt, wird die spezifische reaktive Oberfläche nochmals erhöht, was zu einer noch größeren Ersparnis an Branntkalk und einer weiteren Erhöhung der Druckfestigkeit führt sowie eine nochmalige Verbesserung der Schwindungswerte bewirkt.

Als Mineralmehle kommen nach der Erfindung beispielsweise Magertone in Betracht, deren Zusammensetzung annäherungsweise aus mindestens 60 Gew. % freiem Quarz sowie ca. 30 Gew. % Kaolinit und untergeordnet Glimmern besteht.

Die Zusammensetzung nach dem chemischen Stoffbestand kann beispielsweise wie folgt sein: Siliziumdioxid 83 Gew. %, Aluminiumoxid 13 Gew. %, Gesamteisen als Fe₂O₃ 0,7 Gew. %, Kaliumoxid 0,4 Gew. %, jeweils bezogen auf die chemische Analyse des geglühten mineralischen Füllstoffes.

Der erfindungsgemäße Zuschlagsstoff kann sowohl in reiner Form oder als Gemisch beliebiger Zusammensetzung mit weiteren Zuschlagsstoffen erfolgen.

Die Erfindung wird nachfolgend anhand von Beispielen näher erläutert.

Zur Herstellung von Kalksandstein werden üblicherweise drei Weißkalke mit den Kurzzeichen CL 90, CL 80 und CL 70 eingesetzt; zur Nomenklatur sei auf die Norm EN 459-1 verwiesen. Der Weißkalk CL 70 weist ≥ 70 Gew. % CaO, CL 80 weist ≥ 80 Gew. % CaO und Weißkalk CL 90 weist ≥ 90 Gew. % CaO auf.

Mit Weißfeinkalk CL 80 werden in der Regel gegenüber dem Weißfeinkalk CL 90 höhere Rohlingsstandfestigkeiten, jedoch niedrigere Druckfestigkeiten erzielt. Aufgrund des Zusatzes des erfindungsgemäßen mineralischen Füllstoffes wird der Nachteil des CL 80 bei den Druckfestigkeiten ausgeglichen, so daß der Weißfeinkalk CL 80 bei besseren Rohlingsstandfestigkeiten die gleichen Druckfestigkeiten aufweisen kann wie ein CL 90. Das Gleiche gilt für Weißkalk CL 70 im Verhältnis zu CL 80 beziehungsweise CL 90.

Aus Versuch 1 ergibt sich, dass der anteilige Ersatz von 20 % des CL 70-Kalkes beziehungsweise 10 % des Gesamtkalkes durch den erfindungsgemäßen Zuschlagsstoff (MF) eine Erhöhung der Druckfestigkeit bewirkt, die fast das Niveau wie mit reinem CL 90 Kalk erreicht.

Versuch 2 zeigt, dass bei einer Zugabe von 0,9 % des erfindungsgemäßen Zuschlagsstoffes (MF) bezogen auf die Gesamtmasse trotz der Reduzierung des Gesamtkalkgehaltes von 1,0 % eine Erhöhung der Druckfestigkeit von ca. 21 % erreicht wird. Auch bei Einsparung von 1,4 % Kalk und Zugabe von nur 0,9 % des erfindungsgemäßen Zuschlagsstoffes (MF) wird die Druckfestigkeit noch erhöht. Daneben wird eine Abnahme der Schwindung um ca. 5 % erreicht.

Schließlich zeigt Versuch 3, dass die Reduzierung beider Kalktypen um je 0,5 % bei nur 0,8 % Einsatz des erfindungsgemäßen Zuschlagsstoffes (F) zu einer Steigerung der Druckfestigkeit von ca. 6 % führt, verbunden mit einer Abnahme der Schwindung um bis zu 20 %.

Eine weitere Reduzierung aller Komponenten ist möglich, ohne dass sich die Druckfestigkeit im Rahmen der Messgenauigkeit signifikant verändern wird.

Diese Vorteile lassen sich mit Tonmineralien als Zuschlagsstoffe nicht erreichen. So zeigen Tabelle 1 und 2, dass die Zugabe der Tonminerale "Kaolin" und "Glimmer" bei verschiedenen Modellsanden und immer gleichen Kalkgehalten einen eher negativen Einfluß auf die Druckfestigkeiten haben.

### Versuch 1

| CL 90 [%] | CL 70 [%] | MF [%] | Druckfestigkeit [MPa] |
|---|---|---|---|
| 6 | 0 | 0 | 24,4 |
| 3 | 3 | 0 | 23, 1 |
| 3 | 2,4 | 0,6 | 24,1 |

### Versuch 2

| CL 90 [%] | CL 80 [%] | MF [%] | Druckfestigkeit [MPa] |
|---|---|---|---|
| 5,3 | 4,5 | - | 16,2 |
| 5,0 | 3,8 | 0,9 | 19,6 |
| 4,8 | 3,6 | 0,9 | 17,5 |

| | | | |
|---|---|---|---|
| Abnahme der Schwindung um ca. 5 %. | | | |

### Versuch 3

| CL 90 [%] | CL 80 [%] | MF [%] | Druckfestigkeit [MPa] |
|---|---|---|---|
| 4,3 | 4,3 | - | 23,6 |
| 3,8 | 3,8 | 0,8 | 25,1 |
| 3,6 | 3,6 | 0,7 | 25,2 |

| | | | |
|---|---|---|---|
| Abnahme der Schwindung bis zu 20 %. | | | |

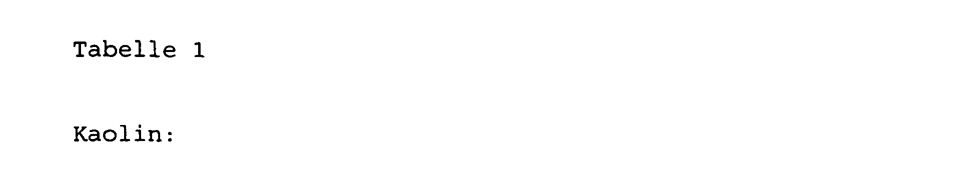

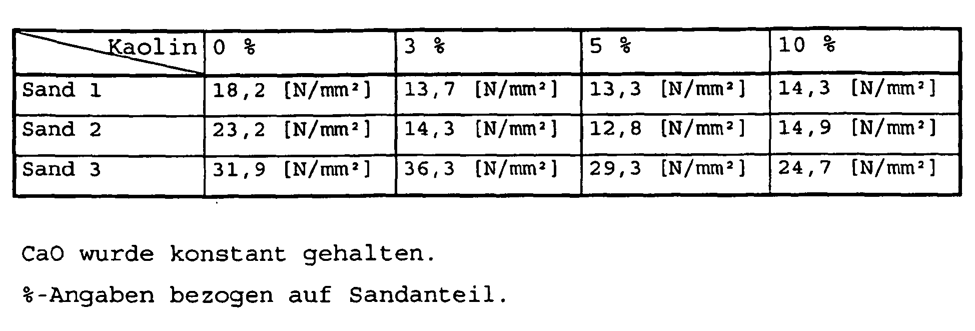

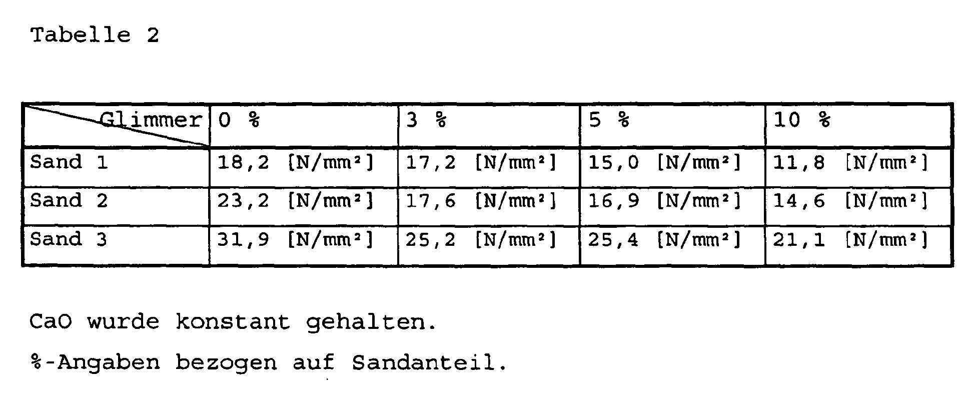

Selbstverständlich ist es auch möglich, den erfindungsgemäßen Zuschlagsstoff bei einem Branntkalk CL 90 einzusetzen. Die wirtschaftlichen Vorteile sind hier zwar nicht so ausgeprägt, jedoch die technischen Vorteile in gleichem Maße gegeben.

## Patentansprüche

1. Zuschlagsstoff zur Herstellung von autoklavgehärteten Baustoffen, wie beispielsweise Kalksandsteine, Betonteile oder dergleichen, **gekennzeichnet durch** einen mineralischen Füllstoff mit einem Siliziumoxid-Anteil von wenigstens 60 Gew. %, vorzugsweise 75 Gew. % und einem Feinstkornanteil von < 2 µm von wenigstens 40 Gew. % des Zuschlagsstoffes wobei der Korngrößenanteil < 0,5 µm mindestens 25 Gew. % des Zuschlagsstoffes beträgt.

2. Zuschlagsstoff nach Anspruch 1 oder 2, **dadurch gekennzeichnet, daß** der mineralische Füllstoff Magerton aufweist, welcher aus mindestens 60 Gew. % Feinquarz sowie ca. 30 Gew. % Kaolit und gegebenenfalls untergeordneten Glimmern besteht.

3. Zuschlagsstoff nach einem der vorhergehenden Ansprüche, **dadurch gekennzeichnet, daß** er etwa 83 Gew. % Siliziumdioxid, etwa 13 Gew. % Aluminiumoxid, etwa 0,7 Gew. % Fe₂O₃ und 0,4 Gew. % Kaliumoxid aufweist.

4. Vormischung bestehend aus Branntkalk, Zement oder weiteren Komponenten mit einem Zuschlagsstoff nach einem der vorhergehenden Ansprüche.

5. Vormischung nach Anspruch 5, **dadurch gekennzeichnet, daß** als Branntkalk CL 70, CL 80 und/oder CL 90 oder eine Mischung hieraus verwendet wird.

## Claims

1. Additive for producing autoclave-hardened building materials, such as calcareous sandstone, concrete components or the like, **characterised by** a mineral filler with a silicon oxide proportion of at least 60 weight %, preferably 75 weight % and a finest grain proportion of less than 2 microns of at least 40 weight % of the additive, wherein the finest grain proportion of less than 0.5 microns is at least 25 weight % of the additive.

2. Additive according to claim 1, **characterised in that** the mineral filler comprises short clay, which consists of at least 60 weight % of fine quartz as well as approximately 30 weight % of kaolite and optionally secondary micas.

3. Additive according to one of the preceding claims, **characterised in that** it comprises approximately 83 weight % of silicon dioxide, approximately 13 weight % of aluminium oxide, approximately 0.7 weight % of Fe₂Oₛ and 0.4 weight % of potassium oxide.

4. Premixture consisting of quicklime, cement or further components with an additive according to any one of the preceding claims.

5. Premixture according to claim 5, **characterised in that** CL 70, CL 80 and/or CL 90 or a mixture thereof is or are used as quicklime.

## Revendications

1. Granulat pour la production de matériaux de construction durcis en autoclave, comme par exemple des briques silico-calcaires, des éléments en béton ou similaires, **caractérisé par** une charge minérale ayant une teneur en oxyde de silicium d'au moins 60 % en poids, de préférence de 75 % en poids et une teneur en grains très fins de < 2 µm d'au moins 40 % en poids du granulat, la teneur en grains de taille < 0,5 µm étant d'au moins 25 % en poids du granulat.

2. Granulat selon la revendication 1 ou 2, **caractérisé en ce que** la charge minérale comporte de l'argile maigre qui consiste en au moins 60 % en poids de quartz fin ainsi qu'en environ 30 % en poids de kaolite et éventuellement en micas de moindre importance.

3. Granulat selon l'une quelconque des revendications précédentes, **caractérisé en ce qu'**il comporte environ 83 % en poids de dioxyde de silicium, environ 13 % en poids d'oxyde d'aluminium, environ 0,7 % en poids de Fe₂O₃ et 0,4 % en poids d'oxyde de potassium.

4. Prémélange constitué de chaux vive, de ciment ou d'autres composants avec un granulat selon l'une quelconque des revendications précédentes.

5. Prémélange selon la revendication 5, **caractérisé en ce qu'**on utilise en tant que chaux vive CL 70, CL 80 et/ou CL 90 ou un mélange de celles-ci.
